# EUROPEAN PATENT APPLICATION

(11) **EP 4 123 855 A1**
(43) Date of publication of application: **25.01.2023**
(21) Application number: 22183877.4
(22) Date of filing: 08.07.2022
(51) Int. Cl.: H02G 5/00, H02G 5/04, H01R 4/48, H01R 25/14

(54) **METHOD AND SYSTEM FOR PROVIDING A MODULAR POWER SUPPLY LINE ALONG A BUILDING UNDER CONSTRUCTION**

(30) Priority: 19.07.2021 IT 202100019037
(71) Applicant: Giovenzana International B.V., 1077 XX Amsterdam (NL)
(72) Inventor: GIOVENZANA, Massimo, Dubai (AE)
(74) Representative: Ripamonti, Enrico

(57) **Abstract**

A method for providing a modular power supply line which extends height-wise along a building under construction, said line being defined by a plurality of power-supply sections (7A, 7B, 7C) extended along a longitudinal axis (W) and provided with straight conductor bars (8), and parallel to each other; the conductor bars (8) of a first power-supply section (7A; 7B) are coupled with the conductor elements of a second, subsequent power-supply section (7B; 7C) through the relative movement between said power-supply sections in a direction orthogonal to the longitudinal axis (W) of said power-supply sections. The constraint of a further, subsequent power-supply section is obtained by cutting off power supply to the power-supply section to which it is connected and which precedes it along the modular power line which extends height-wise.

Furthermore, herein claimed is the system for implementing such method.

## Description

Forming an object of the present invention is a method and a system for providing a modular power line which extends height-wise when constructing a multistorey building where there arises the need to supply power to an appliance, such as a goods lift at heights that progressively grow as the structure or building is constructed. This according to the preambles of the independent method and system claims.

As known, when constructing and maintaining buildings or vertical facilities such as storeyed buildings, for residential or office purposes, sports facilities, there arises the need to power-supply a goods lift or a lift to take it to each floor reached in the construction of the vertical facility or to each floor of the building subjected to maintenance. This so as to allow the use of electrically powered members and/or equipment present at each floor consecutively built during the construction and so to allow goods lifts and lifts to ascend up to the top floor created when erecting the building (or carry out maintenance).

Currently, power supply to the lift or goods lift is carried to such device through long power cables which progressively unwind as the building grows height-wise so as to allow said lift and/or goods lift to travel through it. However, this entails the presence of flexible elements (power cables), along the wall of the construction, which may hinder the worksite staff and create unsafe conditions for the construction staff breaking or ending up entangled somewhere in the building or scaffolding arranged frontally with respect thereto.

Power supply lines consisting of straight bar power conductors inserted into respective containers, usually polygonal-shaped (for example of parallelepiped), are known. These power lines are usually used to allow the movement, therealong, of carriages at contact with said conductors: for example, they are used for transmitting electricity to various types of equipment such as cranes, overhead cranes, conveyor belts, chain conveyors or the like.

Such power supply lines lie horizontally and comprise a plurality of power-supply sections which are assembled, before supplying voltage to the entire line, joining them with a head-tail connection and using screws and bolts which constrain the straight conductor bars to each other. The entire line is power-supplied only at the end of the assembly.

It seems that such power supply lines have never been used to provide a vertical power supply line in buildings under construction or maintenance (restoration of facades, renovation, etc.), where there arises the need for power-supplying a goods lift or a lift to be carried up to the highest portion (highest floor) of the building reached in the construction.

US4179174 discloses a system suitable for providing a modular power line which extends vertically in a building. Such system comprises a plurality of power sections extended along a longitudinal axis thereof, arranged along the building and connected in succession with respect to each other. Each section comprises conductor bars parallel to each other and arranged along such longitudinal axis. The prior art discloses an arrangement of spring elements (clips) which connects the conductor bars which allows the mechanical and electrical constraint thereof. This allows to electrically connect the power sections to each other, said coupled sections defining a single longitudinal axis along which the power line extends.

US2015/380917 discloses a power interface (interposer) of power-supply bars which allows to extend a set of power-supply bars coupling them and maintaining the power-supply of the set. Therefore, a group of power-supply bars which provides power-supply support to the electrical loads may be extended maintaining the power-supply support to the electrical loads. The interposer includes separate sets of connectors which are coupled with separate bar segments and a switching device which electrically couples the connectors selectively, so that a power-supply bar connector can be de-energised while another separate power-supply bar connector is coupled to an energised bar segment and therefore power-supplied subsequently. The extension of the power-supply bars assembly may include the coupling of separate groups of connectors to separate bar segments, in which the separate connector groups are electrically insulated, and the adjustment of the switching device for electrically coupling the separate connector groups, so that the power-supply is distributed between the coupled bar segments.

DE4141799 discloses a bar connector having a U-shaped cross-section which is snap-coupled on ends of the aligned U-shaped bars. Such connector is superimposed to the bars arranged with a narrow space between them. The bars are retained in appropriate guides so that a short section of each of them is exposed. The U-shape has a longitudinal protrusion in each leg, which is coupled with grooves of the bars when it is snap-coupled on the exposed sections thereof.

EP3038222 discloses an electrical system with busbars. The bar system used for the distribution of electricity comprises at least one first and one second bar connected to each other at the ends through a joint which has at least one deformable power conductor through which bar connections are connected to each other so as to compensate for the temperature dilatations of the bars. The bar system may be advantageously installed in cable raceways of buildings.

US337697 discloses a conductor system defined by a plurality of modules each having a casing containing bar conductors; the modules can be assembled to each other.

An object of the present invention is to provide a method and a system which allows to use such modular power supply lines, provided with a plurality of power-supply sections comprising straight bar power conductors, in the construction of a building vertically.

In particular, an object of the present invention is to provide a method and a system of the type mentioned above which allows to power-supply lifts and/or goods lifts up to the various floors of the vertical structure as the building progressively grows height-wise.

Another object is to provide a method and a system of the type mentioned above which is of the relatively simple vertical assembly type on a building which extends height-wise and when building the latter so as to follow the erecting of the construction and reach each floor built.

A further object is to provide a method and a system of the type mentioned above which still offers full safety for the worksite staff where the facility is built in each stage of the construction and use thereof; this throughout the vertical construction of the building.

These and other objects which shall be more apparent to the person skilled in the art are attained by a method and by a system according to the respective attached independent claims.

For a better understanding of the present invention, the following drawings are attached hereto, purely by way of non-limiting example, wherein:
figure 1 schematically and partially shows a storeyed building under construction where the present invention is used by way of example, the scaffolding being shown with a dashed line;
figure 2 shows a partial enlarged view of a step for implementing the method according to the invention;

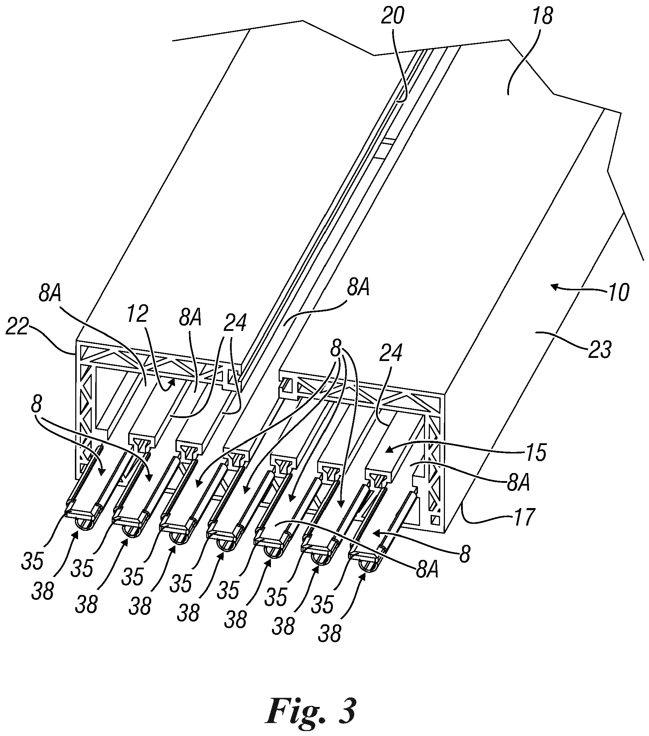

figure 3 shows a perspective view of an end part of a power-supply section of the system of the present invention;
figure 4 shows a perspective view of a first component of the system of figure 3;
figure 5 shows a perspective view of a second component of the power-supply section of the system according to the invention;
figure 6 shows a perspective view of a further, third component of the power-supply section according to the invention;

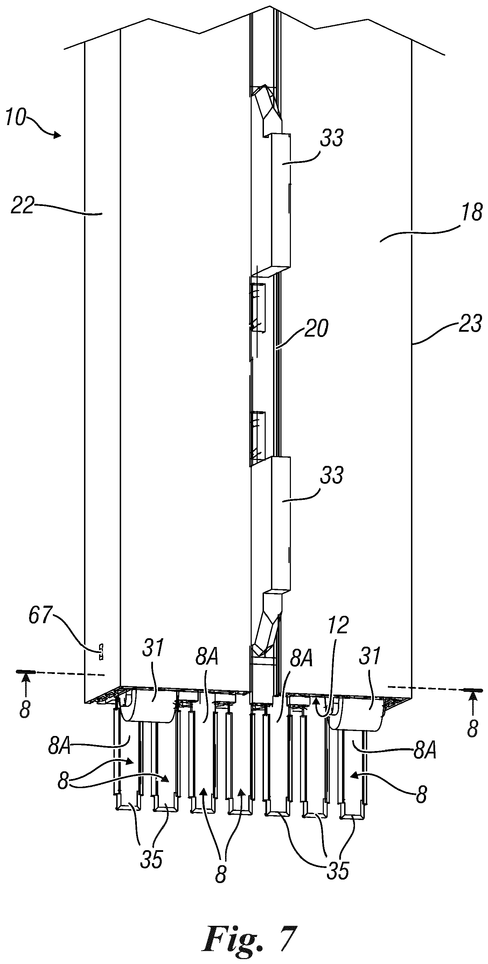

figure 7 shows a partial perspective view of a power-supply section of the system according to the invention, assembled;
figure 8 shows a sectional view according to line 8-8 of figure 7;

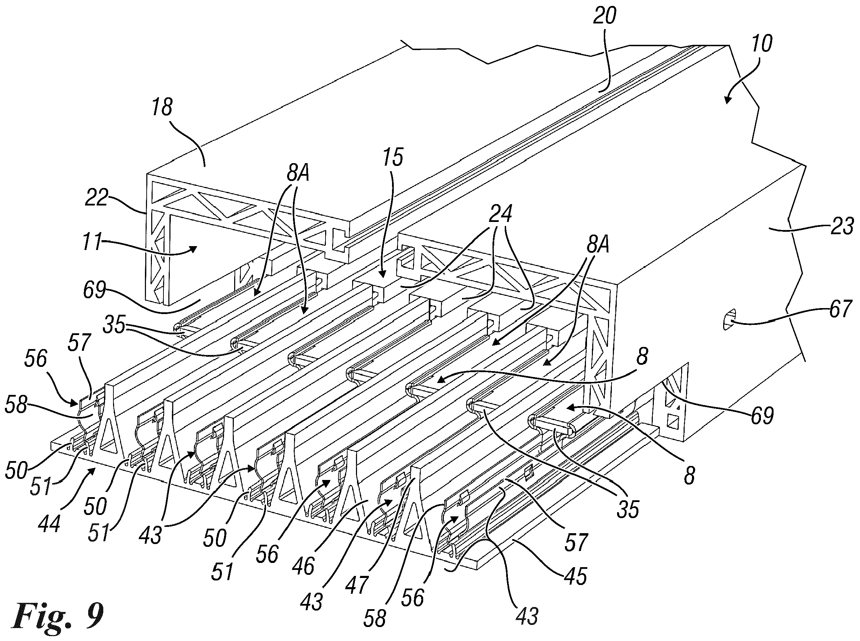

figure 9 shows, horizontally, a perspective view of the end part of the power-supply section of figure 3 coupled to the component of figure 5;
figure 10 shows a perspective view - horizontally - from one side of the power-supply section of the system according to the invention provided with element for disconnecting the power line which such power-supply section is part of;
figure 11 shows a perspective view - horizontally - of the end of the power-supply section of figure 3 with the disconnection element shown without a component thereof for the sake of greater clarity;
figure 12 shows a partial enlarged view - from another angle - of the power-supply section of figure 10 with a different disconnection element shown without a component thereof for the sake of greater clarity and with a further component of the system at the end thereof;
figure 13 shows - in a horizontal partial perspective and partly transparent view - two coupled power-supply sections;
figure 14 shows - in perspective view - a further component of the system according to the invention.

With reference to the aforementioned figures, the present invention relates to a method for providing a modular power line which extends height-wise along a building (such as a storeyed building, a sports facility or the like) as it is progressively built vertically. In other words, the invention relates to a method which allows - through the system which is also subject of the invention - to provide a modular power supply line which extends vertically during the construction of the aforementioned building, which allows to power-supply lifts and/or goods lifts up to each floor (the last built) of the facility during the construction thereof so as to allow to transport goods and people to such floor. Such modular power line comprises a plurality of power-supply sections which are arranged vertically along a wall P of the aforementioned building or facility after it is built and which are coupled successively with respect to each other; vertically, so as to allow to carry a lift or a goods lift up to the top floor built; the entirety through the consecutive connection of a power-supply section to a preceding power-supply section of the vertical power supply line; however, the assembly may allow that at least the power-supply sections which precede (this expression being used to indicate "arranged in a preceding position along the vertical line") the one with which the power-supply section which reaches the top floor built is associated, be kept connected to a fixed power mains. Therefore, only the power-supply section to which the last section is connected is disconnected from the fixed power mains so as to allow the power connection thereof to the last power-supply section; on the contrary, the preceding vertical modular power line part can be kept supplied with power.

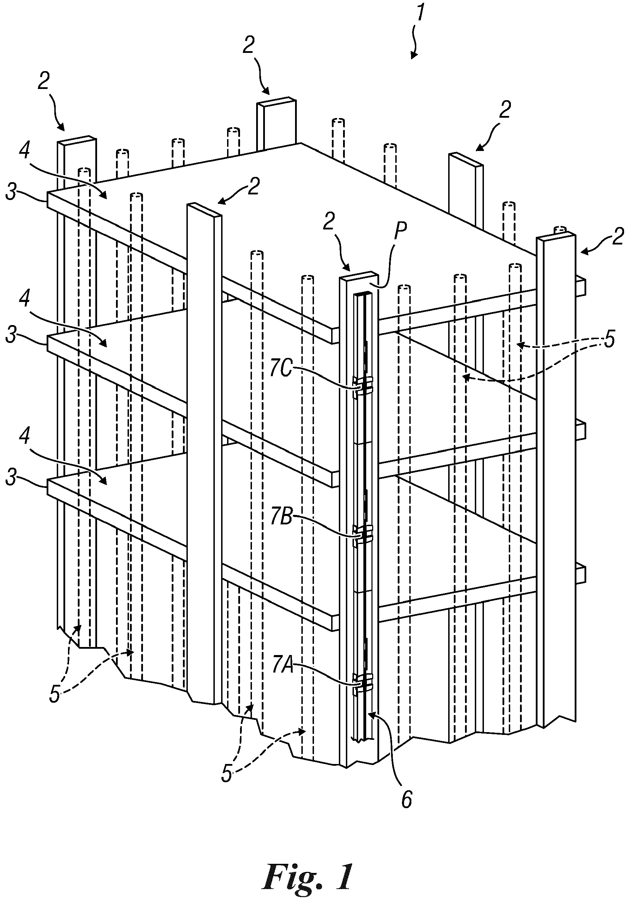

More particularly, figure 1 shows a building, for example a storeyed building, under construction: the building 1 comprises load-bearing parts 2 which support slabs 3 which define floors 4 of the facility, the entirety enclosed by a common scaffolding 5 showed with dashed line solely by way of example.

Along at least one wall P of such load-bearing parts 2 there is provided for a vertical modular power supply line 6 which is fixed to such wall P in any known manner (for example, using a known structure interposed between the wall P and the modular power line 3). The modular power supply lines 6 comprises a plurality of power-supply sections (electrical) 7A, 7B, 7C, with length preferably equal to the usual distance between the slabs 3 of a storeyed building (for example about 3 metres). Each power-supply section comprises a plurality of straight and parallel conductor bars 8 enclosed by a casing 10, for example made of plastic material. Such conductors reach a first and a second end 11 and 12 of the respective power-supply section and preferably protrude from at least one of them (for example from the second end 12), while they reach the other end 11 without protruding therefrom.

The conductor bars 8 are associated with an internal structure 15 of the power-supply section so as us to be unmovable inside the casing 10. As observable in figures, the latter preferably has a lattice structure, resistant stresses or lateral pressure. Such internal structure 15 keeps said conductor bars in proximity of a flat face 17 of the casing 10, while the opposite flat face 18 has a longitudinal slot 20. The faces 17 and 18 are the faces with greater surface area of the casing 10, and they are connected by side walls 21 and 22. The flat face 17 is fixed to the load-bearing part 2 of the building, for example by constraining to a common lattice arranged along the wall 2 or the other part of the building under construction.

The conductor bars 8 have an exposed surface 8A between the grooves 24 of the internal structure 15 on which slides 25 of a carriage 26 movable between the structure 15 and the flat face 18 of the casing 10 slide; such carriage (of power socket, used for carrying the power line and use) has a flat body 30 provided with rollers or wheels 31 slidable along the internal structure 15 of the casing 10 of the fin section 33 slidable, in a guided fashion, in a longitudinal slot 20 of the face 18. A goods lift or similar element for moving tools along the wall may be integrally joined with such fins.

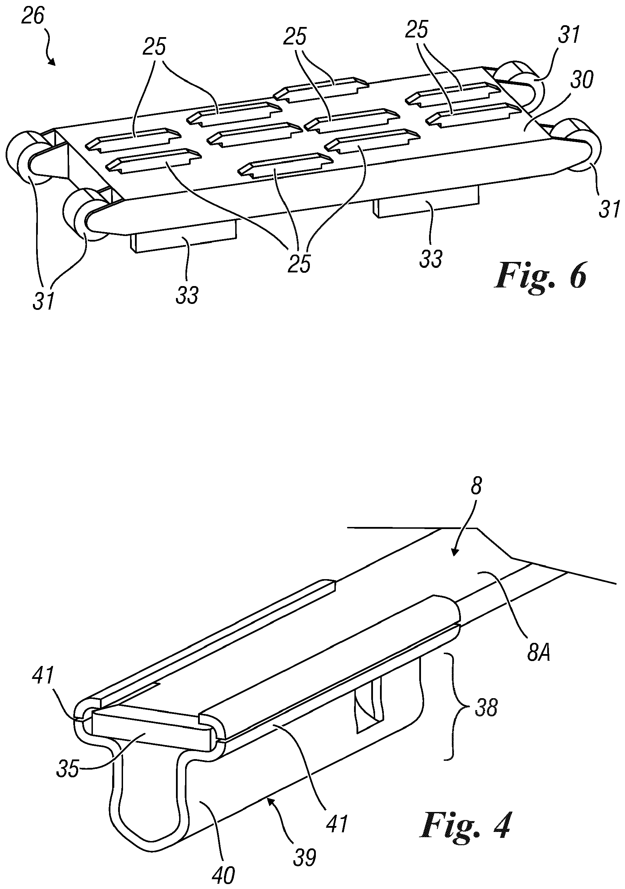

The conductor bars 8 have terminal ends 35. As mentioned, a first end of each conductor protrudes from the second ends 12 of the casing 10, while a second opposite end reaches the first end 11 of said casing without protruding therefrom. Such terminal ends 35 are associated with coupling conductors made of copper (or equivalent conductor material) 38: each coupling conductor has a body 39 having a substantially omega-shaped cross-section (see figure 4) with a central part 40 protruding from the bar, therefore a drop-shaped part (that is the body 39 widens at such part 40). The body 39 has vacant folded fins 41, from which the central part 40 extends: the fins are folded on the respective terminal ends 35 of the conductor bars and they are fixed thereto.

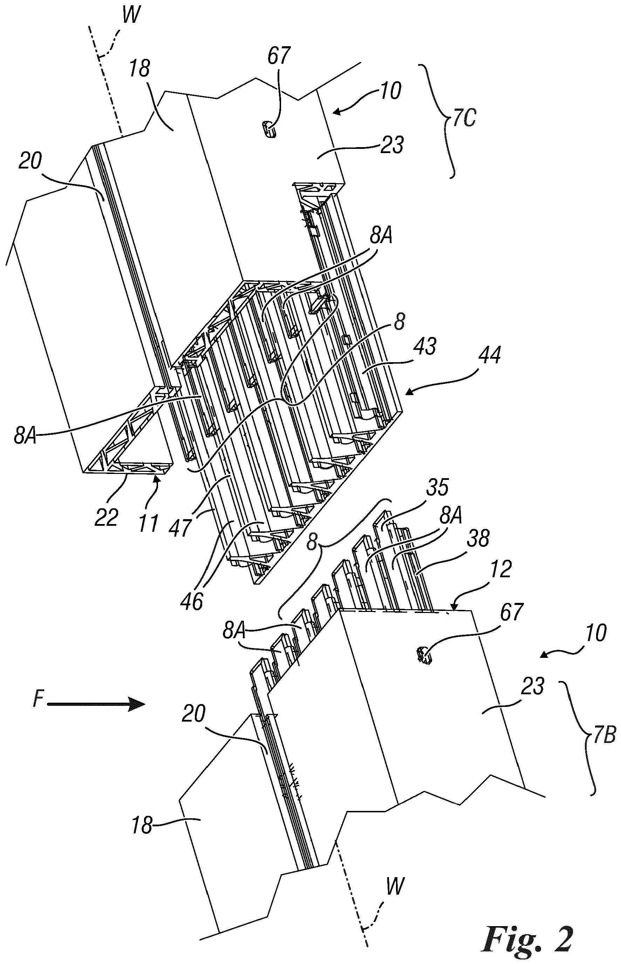

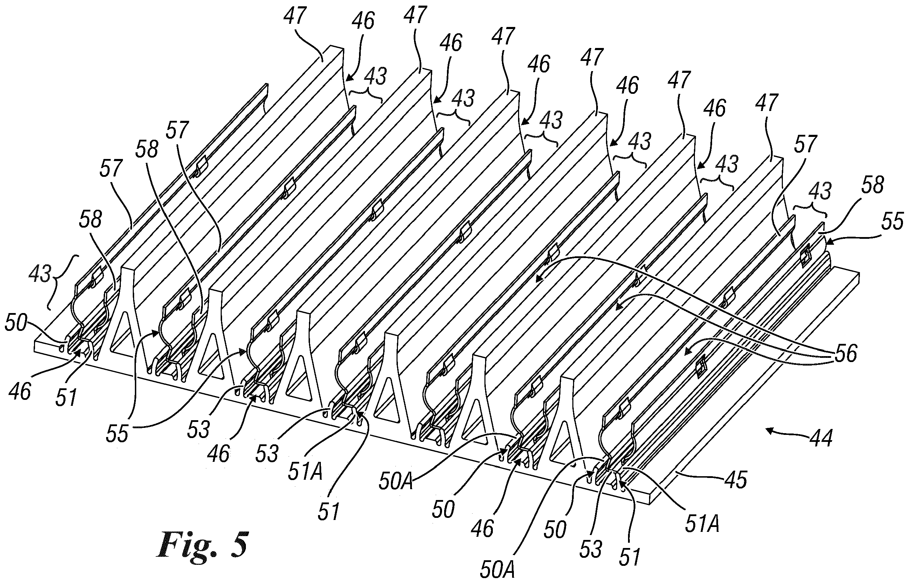

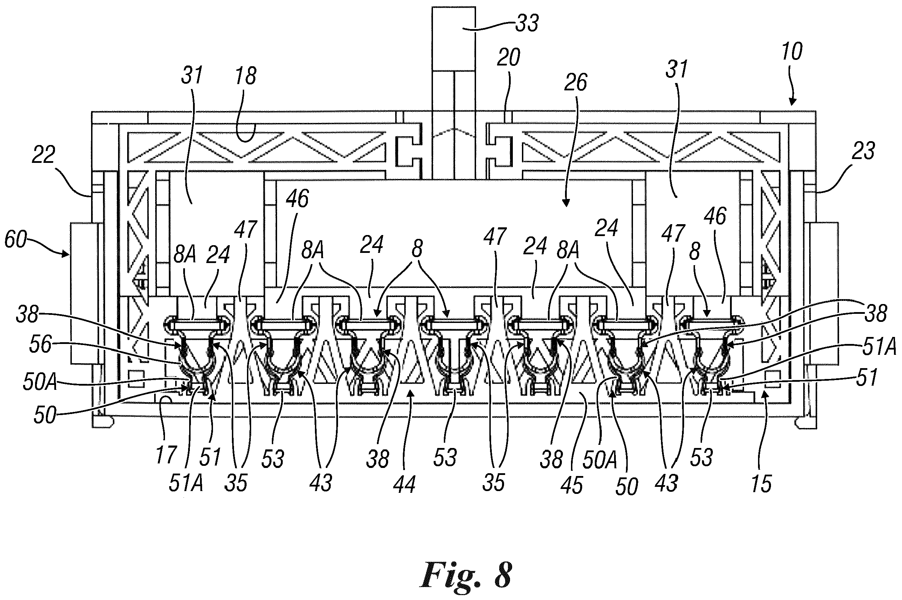

Such coupling conductors 38 are suitable to cooperate with electrically conductive (mechanical) joining elements 43 of a joining clamp 44 which is interposed between two consecutive power-supply sections so as to allow the mechanical constraint and power connection thereof (see figure 2, 5 and 8 in particular). The joining clamp 44 has a base 45 made of insulating material comprising a plurality of grooves 46 between reliefs 47. A pair of extended flexible fins 50, 51, one folded toward the other with the vacant ends 50A and 50B thereof, is present on and along the bottom 49 of each groove 46. A trapezoidal end 53, open on one side, of a corresponding joining element 43 arranged along the base 45, is snap-positioned between said fins 50, 51.

Each joining element 43 is arranged along and within the fins 50, 51 of the base 45 and it has a body 55 having the trapezoidal end 53 and an enlarged portion (and extended along the base 45) 56 defined by opposite fins 57, 58 extending from the aforementioned end 53. Such fins 57, 58 can be elastically moved away and they are suitable to cooperate with corresponding coupling conductors 38 integrally joined with the terminal ends 35 of the conductor bars 8 so as to be coupled with said terminal ends and (mechanically) constrain the conductor bars 8 of two adjacent power-supply sections to the joining clamp. Such (mechanical) coupling is carried out in a direction orthogonal to the longitudinal axes W of said conductor bars (that is according to the arrow F of figure 2), axes which are superimposed once the coupling has been carried out between the conductive joining elements 43 and the coupling conductors 38.

Due to the fact that the joining elements 43 and the coupling conductors 38 of the clamping type, they are made of conductive material, the mechanical joining between them also creates an electrical connection between the conductor bars 8 of the adjacent and consecutive power-supply sections.

Such joining or coupling perpendicularly to the axis W of the power-supply sections is relatively easy to carry out in a worksite where a building is constructed given that it provides for that - after constraining a power-supply section to the wall P of the facility already built - the subsequent section is coupled to the former by pressing such second section toward the part P so as to allow penetration into the elastically deformable fins 57, 58 of the coupling conductors 38 which are joined both mechanically and electrically to the conductive joining elements 43.

The second section will be subsequently fixed to the wall P.

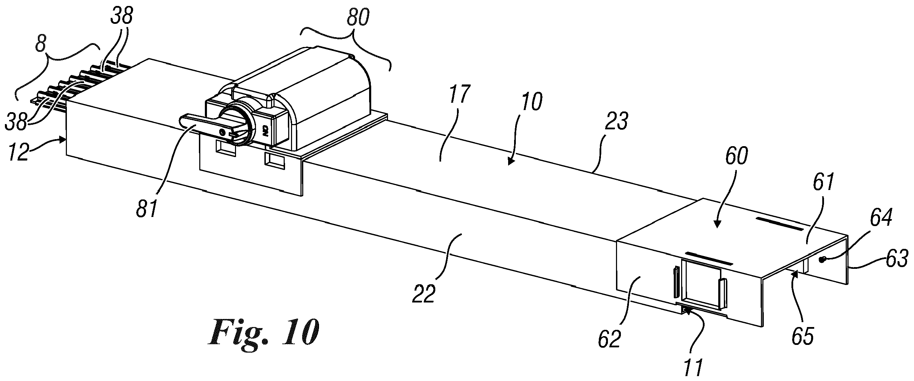

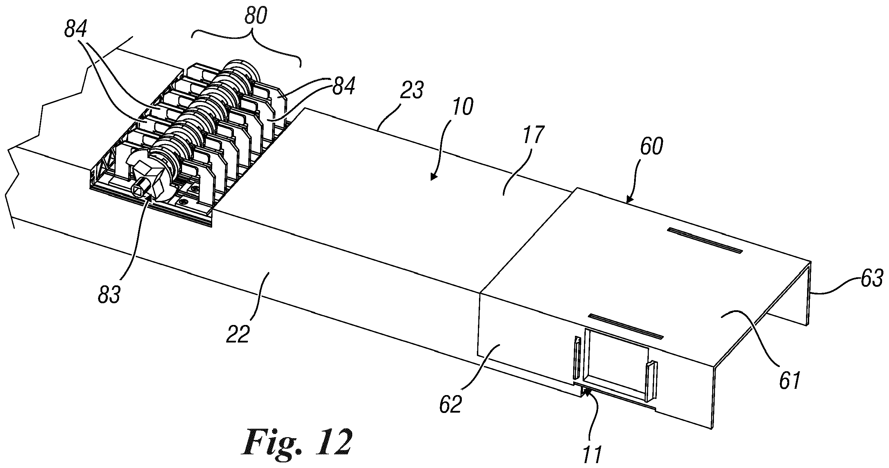

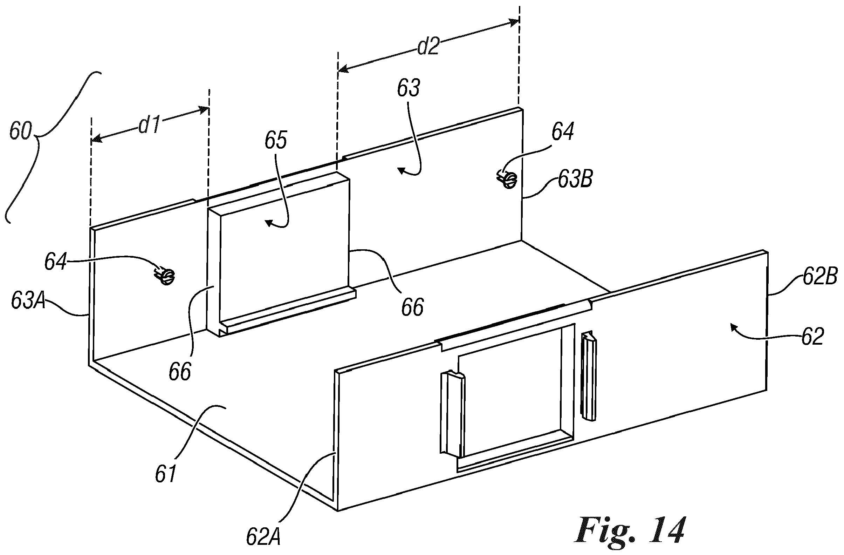

Preferably, it is provided for that the joining clamp 44 be associated with an alignment and joining plate 60 shown in figure 14 and visible in figures 10, 12 (turned by 180°) and 13. Such alignment and joining plate 60 has a flat portion 61 (on which the joining clamp is arranged) from whose edges opposite walls 62 and 63 rise. Internally, such walls each have protruding pins 64 and a shoulder 65 which is arranged, with the sides 66 thereof, at different distances (d1 and d2) from the ends 62A, 62B and 63A, 63B of the walls 62 and 63.

When the alignment and joining plate 60 with the joining clamp 44 is associated with the power-supply sections, the distances d1 and d2 allow the terminal ends 35 of the conductor bars, which protrude from a first power-supply section, to be positioned on the clamp or joining element 44 on the side 66 of the shoulder 65 which is arranged farthest (d2) from the end (62B, 63B) of the respective wall 62, 63; the terminal ends 35 of the conductor bars 8 inside the casing are positioned on the side 66 which is arranged closest (d1) to the corresponding end (62A, 63A) of the walls 61, 62 of the alignment and joining plate.

The walls 66 act as an abutment for the correct positioning of the joining clamp 44 at the second end 12 of a first power-supply section (for example 7B in figures 1 and 2) and of the first end 11 of the second power-supply section (for example 7C in figures 1 and 2). It should be observed that each casing 10 has - within the walls 21 and 22 - seats 67 for the pins 64 of the alignment and joining plate 60 and, at the first end 11, a recess 69 in such walls so as to allow the positioning of the alignment and joining plate 60.

In order to allow the extension of the "vertical" power line as the building progressively grows height-wise, without entirely cutting off the voltage from the entire line, each power-supply section is provided with a power disconnector 80 which allows to cut off power supply downstream of the disconnector so as to allow the joining of such power-supply section (for example 7B in figures 1 and 2) with a subsequent power-supply section (for example 7C in figures 1 and 2). However, the power disconnector 80 allows the power-supply sections preceding the "disconnected" to be still power-supplied so as to carry electricity up to the floor 4 where such disconnected power-supply section is arranged.

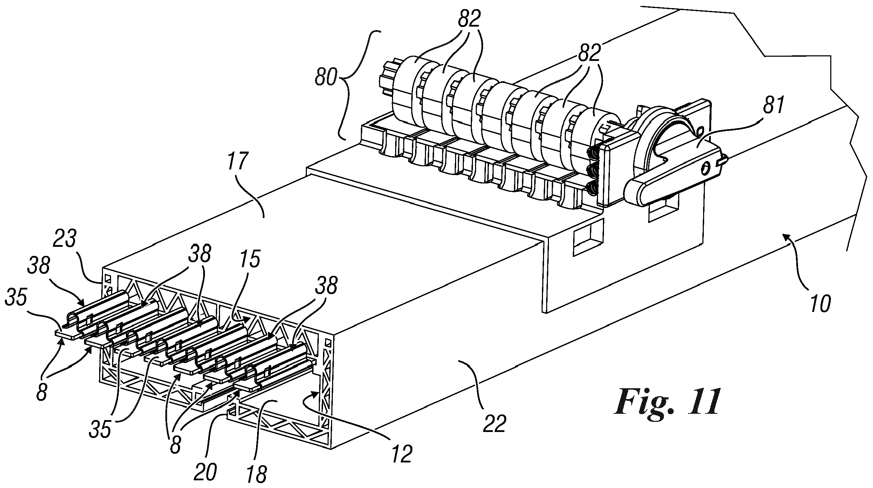

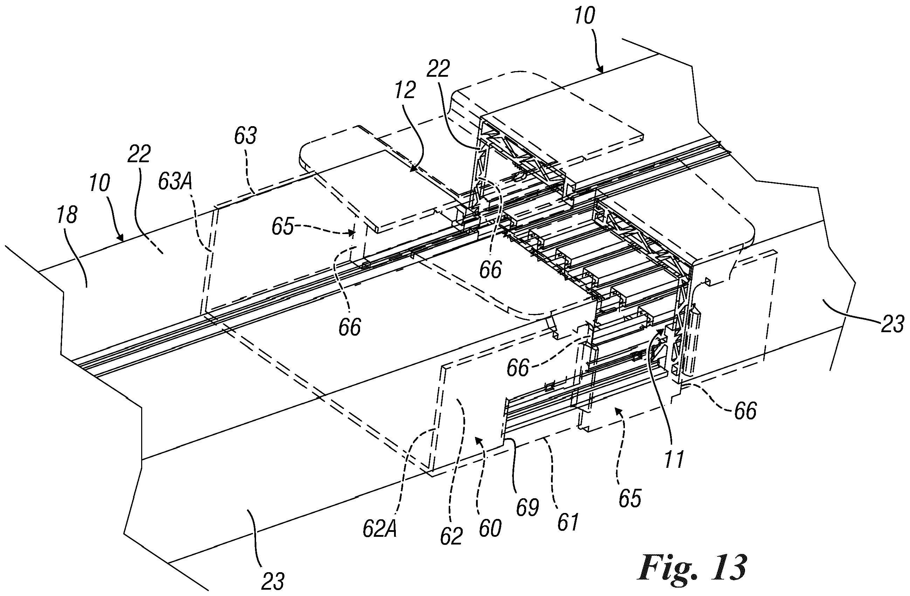

Figures 10-13 show examples (per se known) of power disconnectors 80: in figures 10 and 11 such disconnector comprises an actuator lever 81 acting on cams 82 in turn suitable to intervene on conductor bars 8 in the power-supply section which are suitably made (in a per se known manner) to cut off the power connection continuity between the ends 11 and 12 of such power-supply section when the lever 81 is in the position of figures and maintain such continuity if the lever is turned by 180°(see ON symbol in figure 10). In figure 12, the disconnector 80 comprises an actuator member 83 (actuated in a per se known manner, for example using a lever) provided with conductor strips 84 actuated by such actuator member 83 so as to separate or maintain the power connection between the conductor bars 8 in the power-supply section.

Therefore, the invention provides a method for providing a vertical modular power line that is which extends height-wise and which provides for the use of a succession of power-supply sections (7A, 7B, 7C, for example) with conductor bars 8 which are successively vertically connected to each other, where the preceding power-supply section in the modular power line (for example the section 7A or the section 7B) is fixed to the wall P (as described) and the subsequent power-supply section in the vertical modular power line (in the example the section 7B when coupled to 7A or the section 7C when coupled to the section 7B, already fixed to such wall) is mechanically and electrically joined to the preceding power-supply section through a movement orthogonal to the longitudinal axes W of such sections (7A and 7B or 7B and 7C) which is indicated with the arrow F of figure 2. Such movement leads to (mechanical and electrical) constraint of the conductive joining elements 43 and of the coupling conductors 38; given that the latter is integrally joined with terminal ends 35 of the conductor bars 8, such constraint entails the power connection between the conductors of the consecutive power-supply sections.

In addition, it should be observed that said method actuated through the described system comprising the power-supply sections and the mechanical constraint and power connection means 43 and 38 between the conductor bars 8 of such power-supply sections, also provides for the option that the vertical modular power line be possibly extended without cutting off power from the power-supply sections other than the one to which the further power-supply section is connected; in other words, the method according to the invention allows the subsequent further power-supply section 7C in the vertical modular power line starting from the base of the building and rising along it to be connected to the preceding power-supply section 7B in the vertical modular power line without the power-supply section 7A preceding the power-supply section 7B being disconnected from the power supply mains.

This thanks to the use of power disconnectors 80 associated with said power-supply sections: activating the disconnector 80 associated with the power-supply section 7B allows to connect the subsequent power-supply section 7C without having to cut off power from the power-supply section 7A preceding the power-supply section 7B. In this manner, all appliances electrically connected to such power-supply section 7A may continue to receive electricity and such section 7A may be travelled through by the carriage 26 and therefore by each movable element associated therewith.

This characteristic can be very useful when the building under construction has many floors and many power-supply sections precede the power-supply section to which a subsequent one is connected.

Therefore, the invention arrives to provide a modular power line, which extends vertically, with methods which can be implemented in a worksite fully guaranteeing the safety of the operators. Such power line can be provided using relatively simple methods and without using electrical components that are complex to use on a scaffolding at the worksite.

Although a preferred embodiment of the invention has been described, other solutions can still be obtained in the light of the description outlined above so as to fall within the scope of protection of the claims that follow.

## Claims

1. Method for providing a modular power line which extends vertically and comprising a plurality of power-supply sections (7A, 7B, 7C) extended along a longitudinal axis (W) thereof coinciding with that of the modular power line, said power-supply sections being connected to each other in succession, each power-supply section having bar conductor bars (8) parallel to each other and arranged along said longitudinal axis, said modular power line being suitable to reach the floors (4) of a building (1) under construction, the modular power line being suitable to adapt to the vertical growth of said building, **characterised in that**:
1. a first power-supply section is associated with a wall (P) of the building,
2. such modular power line is extended vertically by associating a subsequent power-supply section to said first power-supply section along the wall (P) after such wall (P) has been extended height-wise,
3. further power-supply sections arranged consecutively with respect to each other are electrically and successively connected as the building is progressively built height-wise, and they are progressively fixed to said wall (P),
the connection between two consecutive power-supply sections being obtained through a relative movement in the direction orthogonal to the longitudinal axes (W) thereof of said power-supply sections, each power-supply section (7A, 7B, 7C) comprising a casing (10) containing said conductor bars (8), along said conductor bars (8) and thereon there moving slides (25) of a carriage (26) provided with at least one fin (33) protruding from a longitudinal slot (20) of said casing (10), a conveyor element suitable to move along the modular power line and between the floors (4) of the building (1) under construction being fixed to said fin (33).

2. Method according to claim 1, **characterised in that** said successive connection is carried out up to the top floor (4) of the building under construction.

3. Method according to claim 1, **characterised in that** said connection is carried out by interposing mechanical constraint and power connection means (38, 43) between the conductor bars (8) of two consecutive power-supply sections, said mechanical constraint and electrical connection means being arranged at the opposite end (11, 12) of said power-supply sections (7A, 7B, 7B, 7C) and being functionally associated with said conductor bars (8).

4. Method according to claim 3, **characterised in that** the mechanical constraint and electrical connection means comprise coupling conductors (38) integrally joined with terminal ends (35) of the conductor bars (8), said coupling conductors being mechanically coupled orthogonally to the longitudinal axis (W) of the consecutive power-supply sections (7A, 7B; 7B, 7C) to conductive joining elements (43) of a joining clamp (44) interposed between the terminal ends (35) of the conductor bars (8) of the consecutive power-supply sections, said mechanical coupling allowing the electrical connection between the consecutive power-supply sections.

5. Method according to claim 1, **characterised in that** power supply is disconnected only from the power-supply section (7A, 7B) arranged along the modular power line which extends vertically and immediately preceding the further power-supply section (7B; 7A) which is connected consecutively, the power supply to the further preceding power-supply sections being maintained.

6. System for providing a modular power line which extends vertically along a building and comprising a plurality of power-supply sections (7A, 7B, 7C) extended along a longitudinal axis (W) thereof parallel to that of the building and connected in succession with respect to each other, each power-supply section having conductor bars (8) parallel to each other, located in a casing (10) and arranged along said longitudinal axis (W), said system being suitable to implement the method according to claim 1 for reaching the floors (4) of the building (1) under construction or maintenance with a power line, the system being in particular suitable to provide a modular power line which extends height-wise and which increases the length thereof as the building (1) extends height-wise, **characterised in that** it comprises mechanical constraint and electrical connection means (38, 43) suitable to allow the electrical constraint of the conductor bars of consecutive power-supply sections arranged along said modular power line, said mechanical constraint and electrical connection means (38, 43) allowing a mechanical coupling between such conductor bars (8) and therefore of the corresponding power-supply sections in a direction orthogonal to the longitudinal axes (W) of said power-supply sections (7A, 7B, 7C), said longitudinal axes (W) being superimposed to connected power-supply sections and defining a single longitudinal axis along which the modular power line extends, along said conductor bars (8) and thereon there moving slides (25) of a carriage (26) provided with at least one fin (33) protruding from a longitudinal slot (20) of said casing (10), a conveyor element suitable to move along the modular power line and between the floors (4) of the building (1) under construction being fixed to said fin (33).

7. System according to claim 6, **characterised in that** said power connection means are coupling conductors (38) integrally joined with terminal ends (35) of corresponding conductor bars (8), the mechanical constraint means being electrically conductive joining elements (43) of a joining clamp (44) which is interposed between two consecutive power-supply sections so as to allow the mechanical constraint and power connection thereof.

8. System according to claim 7, **characterised in that** each coupling conductor (38) comprises a body (39) having a drop-shaped portion (40) which extends from fins (41) folded laterally on the corresponding terminal end (35) of the bar conductor (8), said drop-shaped portion (40) being suitable to cooperate with a corresponding enlarged portion (56) of a body (55) of the respective electrically conductive joining element (43), said enlarged portion being elastically deformable to receive the corresponding drop-shaped portion (40) of the respective coupling conductor (38) through a movement orthogonal to the axis of the power-supply section to be connected.

9. System according to claim 8, **characterised in that** said enlarged portion comprises opposite fins (57, 58) which can be elastically moved away extending from one end (53) of said body (55) of the electrically conductive joining element (43), said end (53) being retained by elastically deformable and opposite elements (50, 51), these elements (50, 51) mechanically constraining the body (55) of the electrically conductive joining element (43) to a base (45) made of insulating material of the joining clamp (44).

10. System according to claim 9, **characterised in that** said base (45) comprises a plurality of elastically deformable and opposite elements (50, 51) suitable to retain corresponding electrically conductive joining elements (43), said deformable and opposite elements (50, 51) being arranged along said base, said electrically conductive joining elements (43) being separated from each other by reliefs (47) of the base (45) made of insulating material which define grooves (46) containing the aforementioned electrically conductive joining elements (43) .

11. System according to claim 6, **characterised in that**, in each power-supply section (7A, 7B, 7C), the conductor bars (8) are associated with an internal structure (15) of said casing.

12. System according to claim 6, **characterised in that** said power-supply sections (7A, 7B, 7C) are provided with a power disconnector (80) suitable to cut off power supply downstream of the corresponding power-supply section so as to allow to connect a subsequent power-supply section thereto.

13. System according to claim 6, **characterised in that** at the opposite ends (11, 12) of two successive power-supply sections (7A, 7B, 7C) there is arranged an aligning and joining element suitable to cover the conductor bars (8) of such power-supply sections and the mechanical constraint and electrical connection means (38, 43).

14. System according to claim 6, **characterised in that** the conductor bars (8) of each power-supply section protrude from a second end (12) of the corresponding power-supply section and terminate at the other, first end (11) of said power-supply section.
